# EUROPÄISCHE PATENTSCHRIFT

(11) **EP 0 818 760 B1**
(45) Veröffentlichungstag und Bekanntmachung des Hinweises auf die Patenterteilung: **19.05.2004**
(21) Anmeldenummer: 97110759.4
(22) Anmeldetag: 01.07.1997
(51) Int. Cl.: G07F 7/08

(54) **Verfahren zur Verhinderung des Missbrauchs von Modulen**
Method to prevent abuse of modules
Méthode pour empêcher l'abus de modules

(30) Priorität: 09.07.1996 DE 19627534
(43) Veröffentlichungstag der Anmeldung: 14.01.1998
(73) Patentinhaber: Deutsche Telekom AG, 53113 Bonn (DE)
(72) Erfinder: Schwenk, Jörg, Dr.rer.nat., 91239 Henfenfeld (DE); Schaefer-Lorinser, Frank, Dr.rer.nat., 64372 Ober-Ramstadt (DE)
(74) Vertreter: Gornott, Dietmar, Dipl.-Ing.

(56) Entgegenhaltungen:
- EP-A- 0 257 596
- EP-A- 0 397 512
- GB-A- 2 172 131
- US-A- 4 510 382

## Beschreibung

Die Erfindung betrifft ein Verfahren zur Verhinderung des Mißbrauchs von durch unerlaubte Vervielfältigungen hergestellten Modulen, in welchen mindestens ein Identitätsmerkmal gespeichert ist, das bei Benutzung des Moduls von einem Endgerät gelesen wird. Die Erfindung betrifft ferner ein Endgerät und ein Modul zur Durchführung des Verfahrens.

Module, in welchen mindestens ein Identitätsmerkmal gespeichert ist, werden in unterschiedlichen Ausführungen für verschiedene Zwecke verwendet. Als Speicher kann dabei ein Magnetstreifen oder eine Halbleiterschaltung (Chip) dienen. Meist werden derartige Module in Form einer Plastikkarte ausgeführt. Eine häufig verwendete Chipkarte ist die sogenannte Guthabenkarte (Debit-Karte), die einen physikalisch oder kryptologisch geschützten Zähler enthält, der bei jeder Anwendung der Guthabenkarte um eine oder mehrere Einheiten erniedrigt, gegebenenfalls auch erhöht wird. Die Karte wird wertlos, wenn der Zähler auf Null bzw. auf einem vorgegebenen Höchststand steht. Andere Formen von derartigen Modulen, insbesondere von Chipkarten, sind Kreditkarten, Scheckkarten und Karten, die zu einer bestimmten Dienstleistung berechtigen, beispielsweise die sogenannte Virtual Calling Card oder das ebenfalls in Kartenform vorliegende Subscriber-Identifikations-Modul für Mobilfunknetze.

Trotz verschiedener Verfahren zum Schutz gegen Mißbrauch der Module ist eine unberechtigte Benutzung nicht auszuschließen. Eine Möglichkeit dazu bietet das Herstellen identischer Kopien, sogenannter Klone, des Moduls durch Auslesen des Speicherinhalts. Das Feststellen von geklonten Modulen wäre zwar durch eine vollständige Registrierung und Überwachung aller Benutzungsvorgänge der Module möglich, wobei insbesondere Guthabenkarten als manipuliert erkannt werden, wenn bei einer Benutzung bzw. bei einem Benutzungsversuch ein höherer Zählerstand als am Ende der vorangegangenen Benutzung gemeldet wird. Eine solche zentrale Auswertung verursacht jedoch hohe Übertragungskosten und erfordert großen Speicheraufwand in einem zentralen Rechner.

Durch EP 0 257 596 A2 ist ein verfahren zur Erkennung einer missbräuchlichen Benutzung von Chipkarten bekanntgeworden, durch das in möglichst kurzer Zeit die Verwendung einer gefälschten Karte erkannt wird. Dazu ist auf der Chipkarte ein mehrstelliger Zähler für verbrauchte Werteinheiten vorgesehen, der bei Erstellung der Karte mit einer individuellen Zufallszahl versehen wird. Diese Zufallszahl wird in einem zentralen Prüfspeicher gespeichert. Bei Benutzung der Chipkarte werden die verbrauchten Einheiten weiter gezählt und der jeweilige neue Zählerstand dem zentralen Prüfspeicher zusammen mit der Prüfnummer, tagesbezogenen Daten und den verbrauchten Werteinheiten pro Gespräch gemeldet und in einer Prüfdatei sortiert und gespeichert. Jeder in der Prüfdatei angekommene Datensatz wird zeitlich eingeordnet und der letzte Zählerstand mit dem vorherigen verglichen. Dies setzt jedoch eine Online-Verbindung zwischen den Endgeräten und dem zentralen Rechner voraus, damit unmittelbar nach der Benutzung einer Karte dort der Zählerstand gespeichert werden kann. Ansonsten könnte bereits ein Mißbrauch angezeigt werden, wenn die gleiche Karte zwischenzeitlich ein zweites Mal benutzt wird.

Aufgabe der vorliegenden Erfindung ist es, ein Verfahren zur Verhinderung des Mißbrauchs von durch unerlaubte Vervielfältigungen hergestellten Modulen anzugeben, wobei keine vollständige Überwachung aller Benutzungsvorgänge aller Module erforderlich ist.

Diese Aufgabe wird erfindungsgemäß dadurch gelöst,
- daß in den für die Benutzung des Moduls vorgesehenen Endgeräten ein Kontrollmerkmal gespeichert wird, das für alle betroffenen Endgeräte gleich ist und von Zeit zu Zeit verändert wird,
- daß bei Benutzung des Moduls ferner ein auf dem Modul gespeichertes veränderbares Kontrollmerkmal vom Endgerät gelesen und mit dem im Endgerät gespeicherten Köntrollmerkmal verglichen wird,
- daß bei Abweichungen das Identitätsmerkmal einem zentralen Rechner gemeldet und das Kontrollmerkmal des Moduls mit dem im Endgerät gespeicherten Kontrollmerkmal überschrieben wird,
- daß beim Rechner eintreffende Meldungen nach Identitätsmerkmalen gesondert gezählt werden und
- daß die Benutzung eines Moduls gesperrt wird, wenn die Zahl der Meldungen mit dem Identitätsmerkmal dieses Moduls einen vorgegebenen Wert erreicht hat.

Das erfindungsgemäße Verfahren ermöglicht ein Erkennen von geklonten Modulen.

Bei einer bevorzugten Anwendung des erfindungsgemäßen Verfahrens ist vorgesehen, daß das Modul als Guthabenkarte ausgebildet ist, auf welcher ein veränderbares Guthaben gespeichert ist, das bei Benutzung der Guthabenkarte von einem Endgerät gelesen und entsprechend einem in Anspruch genommenen Dienst verändert wird. Dieses hat den Vorteil, daß die für die Benutzung der Guthabenkarte erforderlichen Funktionen in dem jeweiligen Endgerät ohne Verbindung zu einem zentralen Rechner ausgeführt werden können, wie beispielsweise die Prüfung auf ein genügend hohes Guthaben und die Verminderung des Guthabens während bzw. nach der Benutzung. Auch ein Vergleich des Identitätsmerkmals der Guthabenkarte mit Identitätsmerkmalen von gesperrten Guthabenkarten kann im Endgerät selbst erfolgen, nachdem zuvor dem Endgerät Identitätsmerkmale von gesperrten Guthabenkarten gemeldet wurden.

In dem zentralen Rechner braucht je Identitätsmerkmal lediglich die Anzahl der Meldungen nach der vorangegangenen Veränderung des Kontrollmerkmals gespeichert zu werden. Der Zeitraum zwischen jeweils zwei Veränderungen des Kontrollmerkmals kann vom Betreiber der Endgeräte bzw. des damit verbundenen Dienstes je nach Bedarf gewählt werden. Ebenso kann der Zeitpunkt der Änderung des Kontrollmerkmals unregelmäßig gewählt werden, so daß er für Außenstehende nicht vorhersehbar ist. Das Kontrollmerkmal kann gegebenenfalls nur wenige Bit umfassen; was unter anderem von der Häufigkeit der Änderung des Kontrollmerkmals abhängt.

Das erfindungsgemäße Verfahren ist im wesentlichen für Telekommunikationsnetze und für Kartentelefone als Endgeräte vorgesehen. Es eignet sich jedoch auch für andere Systeme, bei denen Module mit Endgeräten benutzt werden, die nicht in ständiger Verbindung mit dem zentralen Rechner stehen. Solche Endgeräte können beispielsweise in öffentlichen Verkehrsmitteln zur Prüfung von Modulen und zur Erteilung von Benutzungsberechtigungen vorgesehen sein. Die für das erfindungsgemäße Verfahren erforderliche Verbindung zu einem zentralen Rechner kann dann beispielsweise über ein Datenfunknetz oder durch unmittelbare Verbindung mit dem zentralen Rechner bei einem Aufenthalt im Wartungsbetrieb des Verkehrsunternehmens sein.

Eine Weiterbildung des erfindungsgemäßen Verfahrens besteht darin, daß die Meldungen weitere Daten enthalten, insbesondere das Guthaben. Damit können weitere Erkenntnisse über die unberechtigt hergestellten Guthabenkarten und ihre Benutzung gewonnen werden.

Eine weitere Erschwerung des Mißbrauchs der Module wird-bei dem erfindungsgemäßen Verfahren dadurch ermöglicht, daß das Identitätsmerkmal kryptologisch geschützt ist. Dies kann beispielsweise durch die Speicherung eines Kryptogramms des Identitätsmerkmals oder durch die Verwendung einer beschränkten Anzahl von Zahlen aus einem sehr großen Zahlenraum erfolgen.

Bei dem erfindungsgemäßen Verfahren ist vorzugsweise vorgesehen, daß die Sperrung dadurch bewirkt wird, daß das Identitätsmerkmal des gesperrten Moduls vom Rechner an die Endgeräte übertragen wird und dort bei Benutzung des Moduls mit dem jeweils gelesenen Identitätsmerkmal verglichen wird und daß bei einer Abweichung der Dienst, für den das Modul vorgesehen ist, nicht aktiviert wird. Je nach weiterer Ausgestaltung der Endgeräte und der Module kann auch eine andere Form der Sperrung angewendet werden, beispielsweise ein Einzug des jeweiligen Moduls bzw. ein Speichern eines die Sperrung kennzeichnenden Merkmals auf dem Modul.

Eine Verhinderung des Klonens von Modulen mit einem jeweils aktualisierten Kontrollmerkmal kann durch eine andere Weiterbildung des erfindungsgemäßen Verfahrens dadurch erfolgen, daß das veränderbare Kontrollmerkmal aus einem globalen Kontrollmerkmal nach dem Identitätsmerkmal des jeweiligen Moduls diversifiziert ist und daß im Endgerät vor dem Vergleich das zu vergleichende Kontrollmerkmal aus dem im Endgerät gespeicherten Kontrollmerkmal und dem Identitätsmerkmal berechnet wird.

Ein vorteilhaftes Endgerät zur Durchführung des erfindungsgemäßen Verfahrens umfaßt Einrichtungen zum Speichern des Kontrollmerkmals, zum Vergleichen des Kontrollmerkmals mit dem auf dem Modul gespeicherten Kontrollmerkmal, zum Überschreiben des auf dem Modul gespeicherten Kontrollmerkmals mit dem in dem Endgerät gespeicherten Kontrollmerkmal und zur Meldung von Identitätsmerkmalen an den Rechner.

Ausführungsbeispiele der Erfindung sind in der Zeichnung anhand mehrerer Figuren dargestellt und in der nachfolgenden Beschreibung näher erläutert. Es zeigt:
- Fig. 1: ein Flußdiagramm eines zur Durchführung des erfindungsgemäßen Verfahrens in einem Endgerät benutzten Programms,
- Fig. 2: eine schematische Darstellung eines Telekommunikationsnetzes mit einem Endgerät und
- Fig. 3: eine schematische Darstellung einer Guthabenkarte für das erfindungsgemäße Verfahren.

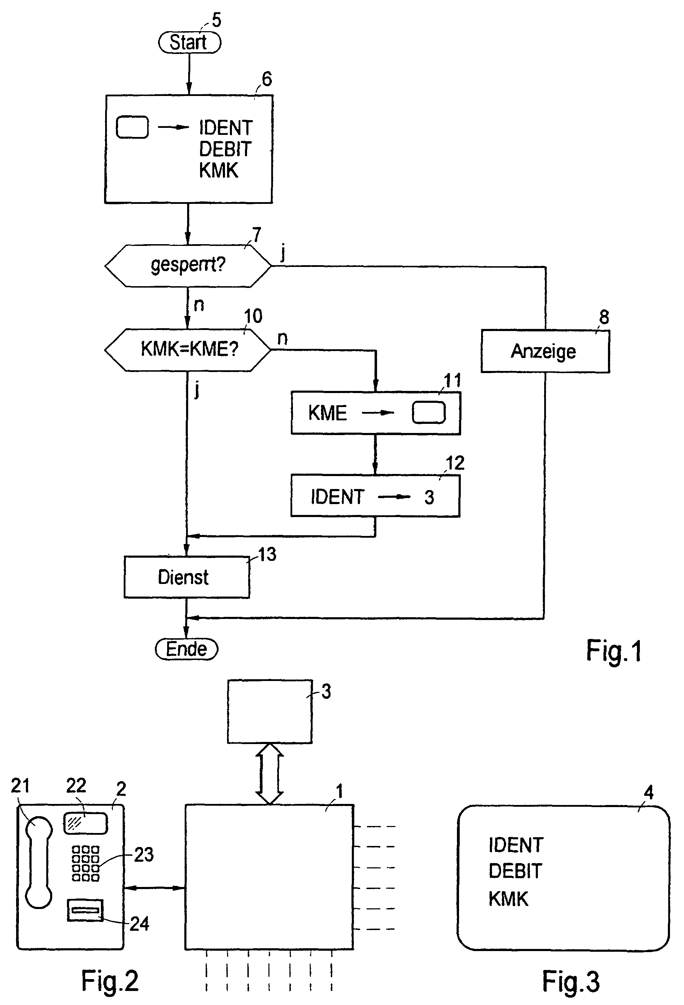

Das dargestellte Ausführungsbeispiel dient zur Verhinderung des Mißbrauchs von Telefonkarten, die als Guthabenkarten ausgebildet sind. An ein schematisch dargestelltes Telekommunikationsnetz 1 (Fig. 2) ist eine Vielzahl von Endgeräten angeschlossen, von denen in Fig. 2 lediglich ein Kartentelefon 2 mit einem Handapparat 21, einem Display 22, einer Tastatur 23 und einem Karten-Schreib/Lese-Gerät 24 dargestellt ist. Für Überwachungszwecke ist ein zentraler Rechner 3 mit dem Telekommunikationsnetz 1 verbunden.

Zur Benutzung des Kartentelefons 2 ist eine Telefonkarte 4 (Fig. 3) erforderlich, die außer einem Identitätsmerkmal IDENT das jeweilige Guthaben DEBIT enthält. Für Zwecke des erfindungsgemäßen Verfahrens ist ein Kontrollmerkmal KMK auf der Chipkarte 4 veränderlich gespeichert.

Nach einem Start bei 5 (Fig. 1), der durch die Einführung einer Guthabenkarte 4 (Fig. 3) in das Kartentelefon ausgelöst wird, werden bei 6 die auf der Telefonkarte gespeicherten Daten IDENT, DEBIT und KMK in einen Mikrocomputer in dem Kartentelefon eingelesen. Bei 7 erfolgt ein Vergleich mit ebenfalls im Kartentelefon als "Schwarze Liste" gespeicherten Identitätsmerkmalen. Ergibt dieser Vergleich, daß die eingeschobene Guthabenkarte gesperrt ist, folgt nach der Verzweigung 7 eine diesbezügliche Anzeige 8 und ein Ende des Programms bei 9. Eine Aktivierung des Dienstes ist somit mit der gesperrten Guthabenkarte nicht möglich.

Ist jedoch das eingelesene Identitätsmerkmal nicht auf der Schwarzen Liste vorhanden, so folgt auf die Verzweigung 7 eine weitere Verzweigung 10 in Abhängigkeit davon, ob das von der Guthabenkarte eingelesene Kontrollmerkmal KMK mit dem in dem Kartentelefon gespeicherten Kontrollmerkmal KME übereinstimmt. Trifft dieses zu, wird bei 13 der gewünschte Dienst - also die Benutzung des Telekommunikationsnetzes - freigegeben.

Weichen jedoch KMK und KME voneinander ab, wird im Programmteil 11 das in dem Kartentelefon gespeicherte Kontrollmerkmal KME in den Speicher der Guthabenkarte geschrieben, wobei das Kontrollmerkmal KMK überschrieben wird. Danach wird im Programmteil 12 das Identitätsmerkmal IDENT zum zentralen Rechner 3 (Fig. 2) übertragen, worauf der Dienst im Programmteil 13 freigegeben und bei 9 das Programm beendet wird.

Treffen mehrere Meldungen mit dem gleichen Identitätsmerkmal IDENT beim zentralen Rechner 3 ein, ist dieses ein Zeichen, daß mehrere - vom Guthaben abgesehen - identische Guthabenkarten im Umlauf sind. Von welcher Zahl von Meldungen an eine Sperre der Guthabenkarte erfolgt, kann je nach praktischen Erfordernissen festgelegt werden. So wird beispielsweise eine Zahl von gößer als 2 zweckmäßig sein, falls eine Sperre für den seltenen Fall verhindert werden soll, daß im Programmteil 11 das Überschreiben des alten Kontrollmerkmals nicht erfolgreich sein sollte. Bei Erreichen der vorgegebenen Zahl meldet der Rechner an alle Kartentelefone, daß die zugehörige Guthabenkarte gesperrt ist.

## Patentansprüche

1. Verfahren zur Verhinderung des Mißbrauchs von durch unerlaubte Vervielfältigungen hergestellten Modulen, in welchen mindestens ein Identitätsmerkmal gespeichert ist, das bei Benutzung des Moduls von einem Endgerät gelesen wird, **dadurch gekennzeichnet,**
- **daß** in den für die Benutzung des Moduls vorgesehenen Endgeräten ein Kontrollmerkmal gespeichert wird, das für alle betroffenen Endgeräte gleich ist und von Zeit zu Zeit verändert wird,
- **daß** bei Benutzung des Moduls ferner ein auf dem Modul gespeichertes veränderbares Kontrollmerkmal vom Endgerät gelesen und mit dem im Endgerät gespeicherten Kontrollmerkmal verglichen wird,
- **daß** bei Abweichungen das Identitätsmerkmal einem zentralen Rechner gemeldet und das Kontrollmerkmal des Moduls mit dem im Endgerät gespeicherten Kontrollmerkmal überschrieben wird,
- **daß** beim Rechner eintreffende Meldungen nach Identitätsmerkmalen gesondert gezählt werden und
- **daß** die Benutzung eines Moduls gesperrt wird, wenn die Zahl der Meldungen mit dem Identitätsmerkmal dieses Moduls einen vorgegebenen Wert erreicht hat.

2. Verfahren nach Anspruch 1, **dadurch gekennzeichnet, daß** das Modul als Guthabenkarte ausgebildet ist, auf welcher ein veränderbares Guthaben gespeichert ist, das bei Benutzung der Guthabenkarte von einem Endgerät gelesen und entsprechend einem in Anspruch genommenen Dienst verändert wird.

3. Verfahren nach Anspruch 2, **dadurch gekennzeichnet, daß** die Meldungen weitere Daten enthalten, insbesondere das Guthaben.

4. Verfahren nach einem der Ansprüche 1 bis 3, **dadurch gekennzeichnet, daß** das Identitätsmerkmal kryptologisch geschützt ist.

5. Verfahren nach einem der Ansprüche 1 bis 4, **dadurch gekennzeichnet, daß** die Sperrung dadurch bewirkt wird, daß das Identitätsmerkmal des gesperrten Moduls vom Rechner an die Endgeräte übertragen wird und dort bei Benutzung des Moduls mit dem jeweils gelesenen Identitätsmerkmal verglichen wird und daß bei einer Abweichung der Dienst, für den das Modul vorgesehen ist, nicht aktiviert wird.

6. Verfahren nach einem der Ansprüche 1 bis 5, **dadurch gekennzeichnet, daß** das veränderbare Kontrollmerkmal aus einem globalen Kontrollmerkmal nach dem Identitätsmerkmal des jeweiligen Moduls diversifiziert ist und daß im Endgerät vor dem Vergleich das zu vergleichende Kontrollmerkmal aus dem im Endgerät gespeicherten Kontrollmerkmal und dem Identitätsmerkmal berechnet wird.

7. Endgerät zur Verhinderung des Mißbrauchs von durch unerlaubte Vervielfältigungen hergestellten Modulen, in welchen mindestens ein Identitätsmerkmal gespeichert ist, das bei Benutzung des Moduls von einem Endgerät gelesen wird, **gekennzeichnet durch** Einrichtungen zum Speichern eines Kontrollmerkmals, zum Vergleichen des Kontrollmerkmals mit dem auf dem Modul gespeicherten Kontrollmerkmal, zum Überschreiben des auf dem Modul gespeicherten Kontrollmerkmals mit dem in dem Endgerät gespeicherten Kontrollmerkmal und zur Meldung von Identitätsmerkmalen an den Rechner.

## Claims

1. Method for preventing the misuse of modules made by illegal copying, said modules containing at least one identity feature, said identity feature being read by a terminal device when the module is used, **characterized in that**
- the terminal devices intended for the use of the module contain a control feature, said control feature being identical for all affected terminal devices and being changed from time to time;
- when the module is used, additionally a changeable control feature stored on the module is read by the terminal device and is compared with the control feature stored in the terminal device;
- in the case of deviations, the identity feature is reported to a central computer and the control feature of the module is overwritten with the control feature stored in the terminal device;
- messages received by the computer are counted separately according to identity features and
- the use of a module is blocked when the number of messages with the identity feature of that module has reached a predetermined value.

2. Method according to claim 1, **characterized in that** the module is in the form of a prepaid card holding a changeable amount of credit, said credit being read by a terminal device when the prepaid card is used and being changed according to a service used.

3. Method according to claim 2, **characterized in that** the messages contain further data, particularly the amount of credit.

4. Method according to any one of claims 1 to 3, **characterized in that** the identity feature is cryptologically protected.

5. Method according to any one of claims 1 to 4, **characterized in that** the blocking of the module is effected **in that** the identity feature of the blocked module is transmitted from the computer to the terminal devices, where, when the module is used, said identity feature is compared with the respectively read identity feature and **in that**, in the case of a deviation, the service for which the module is intended is not activated.

6. Method according to any one of claims 1 to 5, **characterized in that** the changeable control feature is diversified from a global control feature according to the identity feature of the respective module and **in that**, prior to comparison, the control feature to be compared is calculated in the terminal device from the control feature stored in the terminal device and from the identity feature.

7. Terminal device for preventing the misuse of modules made by illegal copying, said modules containing at least one identity feature, said identity feature being read by a terminal device when the module is used, **characterized by** means for storing a control feature; for comparing the control feature with the control feature stored on the module; for overwriting the control feature stored on the module with the control feature stored in the terminal device; and for reporting identity features to the computer.

## Revendications

1. Procédé visant à empêcher l'utilisation abusive de modules produits à partir de reproductions non autorisées, dans lesquels au moins un identificateur est mémorisé, lequel est lu par un équipement terminal lors de l'utilisation du module, **caractérisé en ce que**
- une caractéristique de contrôle est mémorisée dans les équipements terminaux prévus pour l'utilisation du module, cette caractéristique étant la même pour tous les équipements terminaux concernés et étant modifiée périodiquement,
- lors de l'utilisation du module, une caractéristique de contrôle modifiable, mémorisée sur le module, est lue par l'équipement terminal et comparée avec la caractéristique de contrôle mémorisée dans l'équipement terminal,
- en cas de divergence, l'identificateur est communiqué à un calculateur central, la caractéristique de contrôle du module étant substituée par la caractéristique de contrôle mémorisée dans l'équipement terminal,
- les signalisations reçues par le calculateur sont comptées séparément par identificateur,
- l'utilisation d'un module est bloquée lorsque le nombre des signalisations correspondant à l'identificateur de ce module atteint une valeur prédéfinie.

2. Procédé selon la revendication 1, **caractérisé en ce que** le module est une carte prépayée sur laquelle est mémorisé un crédit variable, lequel est lu, lors de l'utilisation de la carte, par un équipement terminal, et modifié en fonction de l'utilisation d'un service

3. Procédé selon la revendication 2, **caractérisé en ce que** les signalisations contiennent d'autres données, notamment l'avoir.

4. Procédé selon l'une des revendications 1 à 3, **caractérisé en ce que** l'identificateur est crypté.

5. Procédé selon l'une des revendications 1 à 4, **caractérisé en ce que** la procédure de blocage consiste **en ce que** l'identificateur du module bloqué est transmis du calculateur aux équipements terminaux et est comparé, lors de l'utilisation du module, avec l'identificateur alors lu, le service pour lequel le module est prévu n'étant pas activé en cas de divergence.

6. Procédé selon l'une des revendications 1 à 5, **caractérisé en ce que** la caractéristique de contrôle modifiable est diversifiée, à partir d'une caractéristique de contrôle globale, en fonction de l'identificateur du module concerné, la caractéristique de contrôle à comparer étant calculée dans l'équipement terminal, avant la comparaison, à partir de la caractéristique de contrôle mémorisée dans l'équipement terminal et de l'identificateur.

7. Equipement terminal servant à empêcher l'utilisation abusive de modules produits à partir de reproductions non autorisées, dans lesquels au moins un identificateur est mémorisé, lequel est lu par un équipement terminal lors de l'utilisation du module, **caractérisé par** des dispositifs de mémorisation d'une caractéristique de contrôle, pour comparaison de la caractéristique de contrôle avec la caractéristique de contrôle mémorisée sur le module, pour substitution de la caractéristique de contrôle mémorisée sur le module par la caractéristique de contrôle mémorisée dans l'équipement terminal et pour signalisation d'identificateurs au calculateur.
